# EUROPEAN PATENT SPECIFICATION

(11) **EP 1 608 130 B1**
(45) Date of publication and mention of the grant of the patent: **09.01.2008**
(21) Application number: 05013115.0
(22) Date of filing: 17.06.2005
(51) Int. Cl.: H04L 29/08, H04L 12/56

(54) **Transmitter, communication system, and communication method**
Sender, Kommunikationssystem, und Kommunikationsverfahren
Emetteur, système de télécommunication, et méthode de télécommunication

(30) Priority: 18.06.2004 JP 2004181668
(43) Date of publication of application: 21.12.2005
(73) Proprietor: NTT DoCoMo, Inc., Tokyo (JP)
(72) Inventor: Moon, Sung Uk, NTT DoCoMo, Inc., Chiyoda-ku Tokyo (JP); Ishii, Minami, NTT DoCoMo, Inc., Chiyoda-ku Tokyo (JP); Nakamura, Takehiro, NTT DoCoMo, Inc., Chiyoda-ku Tokyo (JP)
(74) Representative: HOFFMANN EITLE

(56) References cited:
- EP-A- 0 895 379
- WO-A-00/21253
- WO-A-02/069547
- WO-A-20/04015906
- ROOBOL C ET AL: "A proposal for an RLC/MAC protocol for wideband CDMA capable of handling real time and non-real time services" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, vol. 1, 18 May 1998 (1998-05-18), pages 107-111, XP010287797 ISBN: 0-7803-4320-4
- HOLMA AND A TOSKALA H: "WCDMA for UMTS - Chapter 7 Radio Interface Protocols" WCDMA FOR UMTS: RADIO ACCESS FOR THIRD GENERATION MOBILE COMMUNICATIONS, 2000, pages 121-142, XP002266796

## Description

### BACKGROUND OF THE INVENTION

### 1. Field of the Invention

The present invention relates to a transmitter, a communication system, and a communication method.

### 2. Description of the Related Art

Conventionally, a service called an MBMS (Multimedia Broadcast Multicast Service) is provided, which a receiver uses a communication line common to plural receivers for multicast-transmitting or broadcast-transmitting multimedia contents (see, for example, 3GPP TSG-RAN, "TS25.346 V6.0.0 Introduction of Multimedia broadcast multicast services (MBMS) in Radio access network (RAN)", March 2004). In this service, a packet that is missing because a receiver cannot receive differs from receiver to receiver. Therefore, in the MBMS, repetitive transmission, which the transmitter transmits all the multimedia contents multiple times, and Point to Point (PtP) repair, which a communication line is connected individually between the transmitter and each receiver using each dedicated channel to re-transmit and re-receive the missing packet of each receiver, are carried out.

The repetitive transmission and the PtP repair are carried out in an IP layer. The packet in the IP layer is divided into plural data units in an RLC (Radio Link Control) layer, which is lower layer than the IP layer. In other words, an upper layer packet is divided into plural lower layer data units.

However, in the conventional repetitive transmission and PtP repair, also when the receiver cannot receive some lower layer data units included in the upper layer packet, it discards all the lower layer data units belonging to the upper layer packet and receives again all the lower layer data units belonging to The upper layer packet. At this time, it is not ensured that the lower layer data units properly received last time can be again received correctly in the repetitive transmission and the PtP repair. Therefore, the reception quality may be deteriorated in some cases. In order to maintain the reception quality, it is necessary to attempt again to receive the upper layer packet including the unsuccessfully received lower layer data units in the repetitive transmission or the PtP repair, which might increase the processing load of the receiver and the transmitter.

In WO 2004/015906 A2, there is described an efficient memory allocation in a wireless transmit/receiver unit. The approach described allows for a effective sharing of a hardware memory of a wireless transmit receive unit. The memory is shared among various buffers of different entities. More particularly, memory is shared among the MAC reordering buffers and the RLC reception buffers.

Further, in EP 0 895 379 Al, there is described a data transmitting method. It is suggested to divide a data unit into a plurality of packets, to attach identifiers to the packets, to transmit the packets, to receive the packets, to decide whether all the packets for reassembling the data unit are received in accordance with the identifiers, and to reassemble the user data unit when the decision is affir mative.

Still further, in Roobol C. et al.: "A proposal for an RLC/MAC protocol for wideband CDMA capable of handling real time and non-real time services", Vehicular Technology Conference, 1998, there is described a proposal for a radio link control/medium access control (RLC/MAC) protocol for a W-CDMA system. It makes use of the flexibility offered by the physical layer in the sense that it supports variable bit rate services. In addition the RLC/MAC is designed such that multiple services are supported, without the necessity to transmit with multiple spreading codes.

### SUMMARY OF THE INVENTION

An object of the present invention is to prevent deterioration in the reception quality and an increase in the processing load.

A transmitter according to an embodiment of the present invention includes the features of claim 1.

Conventionally, the reason why it is necessary to discard all the lower layer data units belonging to the unsuccessfully received upper layer packet and to receive again all the lower layer data units belonging to the upper layer packet is that the receiver cannot determine the missing lower layer data unit that is necessary to restore the data series of the upper layer because it cannot grasp the relationship between the lower layer data units, which are obtained by dividing the upper layer packet generated based on the data series of the upper layer, and the data series of the upper layer.

According to the above-mentioned transmitter, it is possible to generate the lower layer data units to which sequence numbers for identifying the data series of the upper layer are assigned and to transmit the lower layer data units. Therefore, the receiver can restore the data series of the upper layer by combining the lower layer data units properly received last time and the newly received lower layer data units using the sequence numbers. Therefore, it is possible to prevent deterioration in the reception quality and an increase in the processing load of the receiver and the transmitter.

A communication system according to an embodiment of the present invention includes the features of claim 5, i.e. a transmitter configured to generate lower layer data units to which sequence numbers for identifying a data series of an upper layer are assigned, and transmit the lower layer data units, and a receiver configured to receive the lower layer data units and combine received lower layer data units based on the sequence numbers.

A communication method according to an embodiment of the present invention includes the features of claim 6, i.e. generating lower layer data units to which sequence numbers for identifying a data series of an upper layer are assigned, and transmitting the lower layer data units.

### BRIEF DESCRIPTION OF THE DRAWINGS

Fig.1 is a diagram showing a communication system according to an embodiment of the present invention.
Fig.2 is a diagram showing a protocol stack according to an embodiment of the present invention.
Fig.3 is a diagram showing an example of assignment of sequence numbers.
Fig.4 is a diagram showing a first method according to an embodiment of the present invention.
Fig.5 is a diagram showing a second method according to an embodiment of the present invention.
Fig. 6 is a diagram showmg an RLC-PDU in the second method according to an embodiment of the present invention.
Fig.7 is a diagram for showing a fourth method according to an embodiment of the present invention.
Fig.8 is a flow chart showing an operation procedure of a server according to an embodiment of the present invention.
Fig.9 is a flow chart showing an operation procedure of a mobile station according to an embodiment of the present invention.

### DETAILED DESCRIPTION OF THE EMBODIMENTS

### (Communication system)

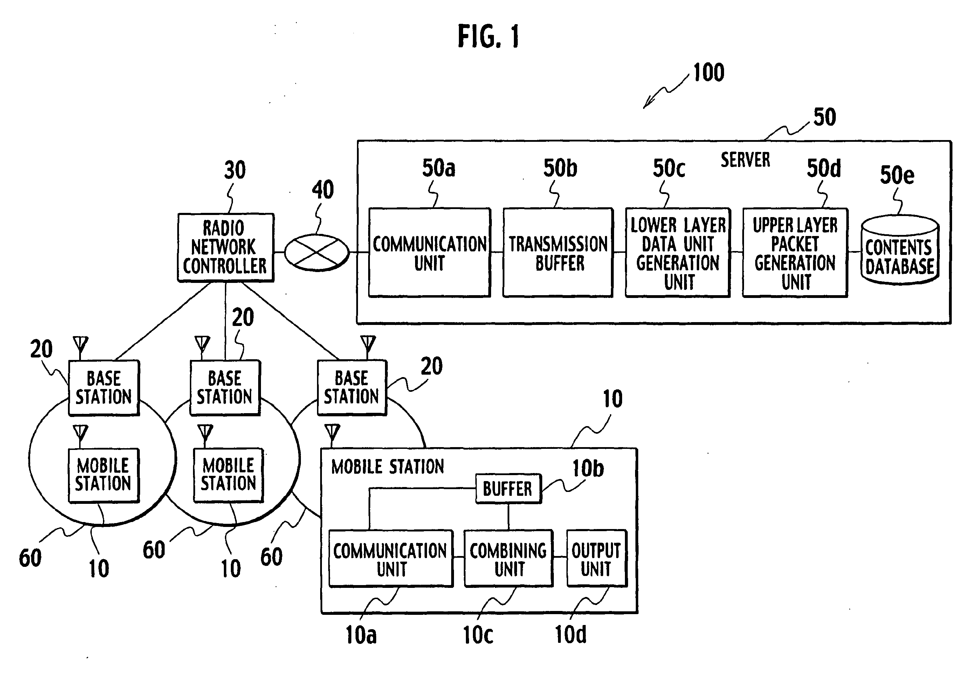

As shown in Fig.1, a communication system 100 includes a server 50, a core network 40, a radio network controller 30, base stations 20, and mobile stations 10. The server 50 transmits contents to the mobile station 10 via the core network 40, the radio network controller 30, and the base station 20. For example, the server 50 can broadcast-transmit or multicast-transmit the same contents to the plural mobile stations 10 existing in cells 60 covered by the plural base stations 20 or to the plural mobile stations 10 existing in a cell 60 covered by the base station 20. The server 50 can broadcast-transmit or multicast-transmit contents using communication lines common to the plural mobile stations 10. As described above, in the communication system 100, the server 50 serves as a transmitter transmitting contents, which are a data series, and the mobile station 10, serves as a receiver receiving the data senes.

The server 50 includes a communication unit 50a, a transmission buffer 50b, a lower layer data unit generation unit 50c, an upper layer packet generation unit 50d, and a contents database 50e. The contents database 50e retains the contents, which are the data series to be transmitted by the server 50. For example, the contents database 50e retains multimedia contents.

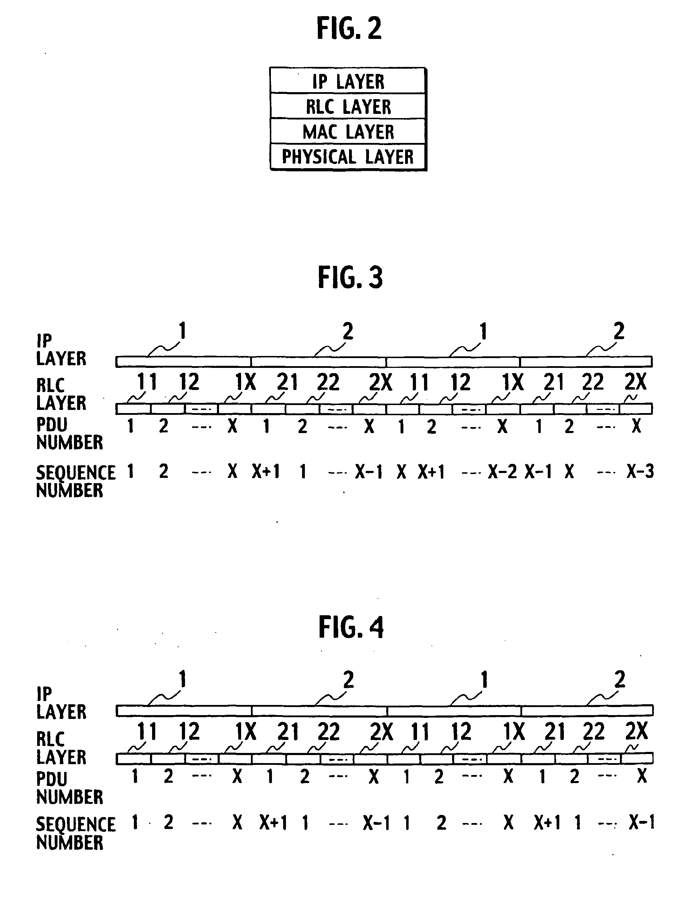

The upper layer packet generation unit 50d generates an upper layer packet. The communication system 100 can use, for example, a protocol stack shown in Fig 2. The protocol stack includes a physical layer, an MAC (Medium Access Control) layer, an RLC (Radio Link Control) layer, and an IP (Internet Protocol) layer in the ascending order.

The upper layer packet generation unit 50d acquires a data series (contents) from the contents database 50e. The upper layer packet generation unit 50d generates one or plural upper layer packets including the data series. The upper layer packet generation unit 50d generates an IP packet as the upper layer packet. The upper layer packet generation unit 50d inputs the generated upper layer packet into the lower layer data unit generation unit 50c.

The lower layer data unit generation unit 50c generates lower layer data units to which sequence numbers for identifying the data series of the upper layer are assigned. The lower layer data unit includes a lower layer packet, a frame, a data unit, an error correction code unit, a transport block, and the like in accordance with the lower layer protocol. The lower layer data unit generation unit 50c generates an RLC-PDU (Radio Link Control - Protocol Data Unit) as the lower layer data unit.

The lower layer data unit generation unit 50c acquires the upper layer packer from the upper layer packet generation unit 50d. The lower layer data unit generation unit 50c divides the data series of the upper layer constituted of one or plural upper layer packets into plural lower layer data units. For example, the lower layer data unit generation unit 50c can divide one data series into 30 lower layer data units when the length of the data series of the upper layer is 1,500 bytes and the length of the lower layer data unit is 50 bytes. The lower layer data unit generation unit 50c assigns sequence numbers to the divided plural lower layer data units. The lower layer data unit generation unit 50c stores the upper layer packet including the generated plural lower layer data units in the transmission buffer 50b.

The transmission buffer 50b retains the upper layer packet (IP packet). The communication unit 50a transmits the lower layer data unit (RLC-PDU). The communication unit 50a acquires the upper layer packet (IP packet) from the transmission buffer 50b and transmits it to the mobile stations 10. In this manner, the communication unit 50a transmits the lower layer data unit (RLC-PDU) as an upper layer packet including plural lower layer data units. The communication unit 50a broadcast-transmits or multicast-transmits the plural lower layer data units constituting the data series (contents) to the plural mobile stations 10 via the core network 40, the radio network controller 30, and the base stations 20.

Further, the communication unit 50a carries out the repetitive transmission which is transmitting the data series (contents) multiple times and the PtP repair (Point to Point repair) which is connecting each dedicated channel between the communication unit 50a and each mobile station 10, and transmitting again the unsuccessfully received upper layer packet to each mobile station 10. The communication unit 50a transmits the upper layer packet (IP packet) in the repetitive transmission or the PtP repair. The data series (contents) is mapped in the order from the upper layer (IP layer) to the lower layer (physical layer) and is transmitted.

The mobile station 10 includes a communication unit 10a, a buffer 10b, a combining unit 10c, and an output unit 10d. The communication unit 10a receives the lower layer data units to which the sequence numbers for identifying the data series of the upper layer are assigned. For example, the communication unit 10a receives the upper layer packet (IP packet) which the server 50 broadcast-transmits or muleicast-transmits. In this manner, the communication unit 10a receives the lower layer data units (RLC-PDUs) as the upper layer packet including the plural lower layer data units. The communication unit 10a stores the received upper layer packet in the buffer 10b. The buffer 10b retains the upper layer packet (IP packet) received by the communication unit 10a.

The communication unit 10a receives again the unsuccessfully received upper layer packet through the repetitive transmission or the PtP repair. At this time, it is preferable for the communication unit 10a to omit to receive again the properly received lower layer data units and to receive again only the unsuccessfully received lower layer data units. The communication unit 10a can judge the unsuccessfully received lower layer data units with their sequence numbers and receives again the lower data units to which the sequence numbers are assigned. The communication unit 10a inputs the lower layer data units received again into the combining unit 10c.

The combining unit 10c combines the received lower layer data units (RLC-PDUs) based on the sequence numbers. It is preferable for the combining unit 10c to combine the successfully received lower layer data units and the again received lower layer data units, which had been unsuccessfully received before. In the mobile station 10, the buffer 10b retains the upper layer packet having the lower layer data units of which one part is missing without discarding it. The combining unit 10c acquires the again received lower layer data units, which had been unsuccessfully received, from the communication unit 10a. The combining unit 10c restore the upper layer packet and restore the data series (contents) of the upper layer by combining the upper layer packet retained by the buffer 10b, one part of which is missing, and the lower layer data units received again. The combining unit 10c outputs the restored upper layer data series (contents) to the output unit 10d.

According to this, the mobile station 10 can restore the data series of the upper layer by omitting to receive again the lower layer data units once received successfully, and receiving only the lower layer data units one part of which is missing because of unsuccessful reception. Therefore, the processing load of the mobile station 10 can be further reduced.

In this manner, the server 50 functions as a transmitter configured to generate lower layer data units to which the sequence numbers for identifying the data series of the upper layer are assigned, and transmit the lower layer data units. On the other hand, the mobile station 10 functions as a receiver configured to receive the lower layer data units and combine the received lower layer data units based on the sequence numbers.

Next, the generation of the lower layer packet to which the sequence number are assigned is explained more detail using Fig.3 to Fig.7. In Fig.3 to Fig.5, the IP packet is used as an upper layer packet and the RLC-PDU is used as a lower layer data unit. The data series (contents) is transmitted in two IP packets 1 and 2. Further, the IP packets 1 and 2 are transmitted twice repeatedly. Each of the IP packets 1 and 2 is divided into X pieces of RLC-PDUs. In other words, the IP packet 1 is divided into RLC-PDUs 11, 12, ..., and 1X and the IP packet 2 is divided into RLC-PDUs 21, 22, ..., and 2X. PDU numbers from 1 to X are sequentially assigned to the RLC-PDUs 11 to 1X and the RLC-PDUs 21 to 2X included in each of the IP packets 1 and 2.

Here, as shown in Fig.3, when the maximum value of the sequence numbers is less than a value necessary to identify the upper layer data series, different sequence numbers are assigned to the RLC-PDUs even though the data series of the upper layer is the same. In the case shown in Fig.3, the maximum value of the sequence numbers of the RLC-PDUs required to identify the data series of the upper layer constituted of two IP packets 1 and 2 is 2×X, however the actual maximum value of the sequence numbers is X+1. Therefore, the sequence number of the RLC-PDU 11 with the PDU number 1 in the IP packet 1 at the first transmission is 1, however the sequence number of the RLC-PDU 11 with the PDU number 1 in the IP packet 1 at the repetitive transmission is X. As a result, although the mobile station 10 can correctly receive the RLC-PDU, which was impossible to receive correctly last time, at the repetitive transmission, it cannot judge the relationship between the RLC-PDU and the data series of the upper layer.

Therefore, the lower layer data unit generation unit 50c of the server 50 generates the RLC-PDUs to which the sequence numbers for identifying the data series of the upper layer are assigned with any one of first to fourth methods descnbed below.

### (First method)

As shown in Fig.4, the lower layer data unit generation unit 50c assigns the sequence numbers of the identical series to the series of the lower layer data units, which is identical in the data series of the upper layer. Specifically, the lower layer data unit generation unit 50c assigns the sequence numbers 1 to X and X+1 to X-1 of the identical series at the first transmission and at the repetitive transmission to the RLC-PDUs 11 to 1X and 21 to 2X constituting the data series of the upper layer, which is constituted of two IP packets 1 and 2.

In this manner, the lower layer data unit generation unit 50c assigns the sequence numbers of the same series to the series of the lower layer data units at the first transmission and at the retransmission such as the repetitive transmission or the PtP repair, thereby making it possible to identify also that the data series of the upper layer is a data series of retransmission by the repetitive transmission or the PtP repair.

According to this, the mobile station 10 can easily judge that the series of the lower layer data units, to which the sequence numbers 1 to X-1 of the same series are assigned, i.e. RLC-PDUs 11 to 2X, belong to the data series of the same upper layer. Further, the mobile station 10 can easily identify that the received lower layer data units (RLC-PDUs) are a data series of retransmission based on the sequence numbers. Therefore, the processing load of the mobile station 10 can be further reduced.

### (Second method)

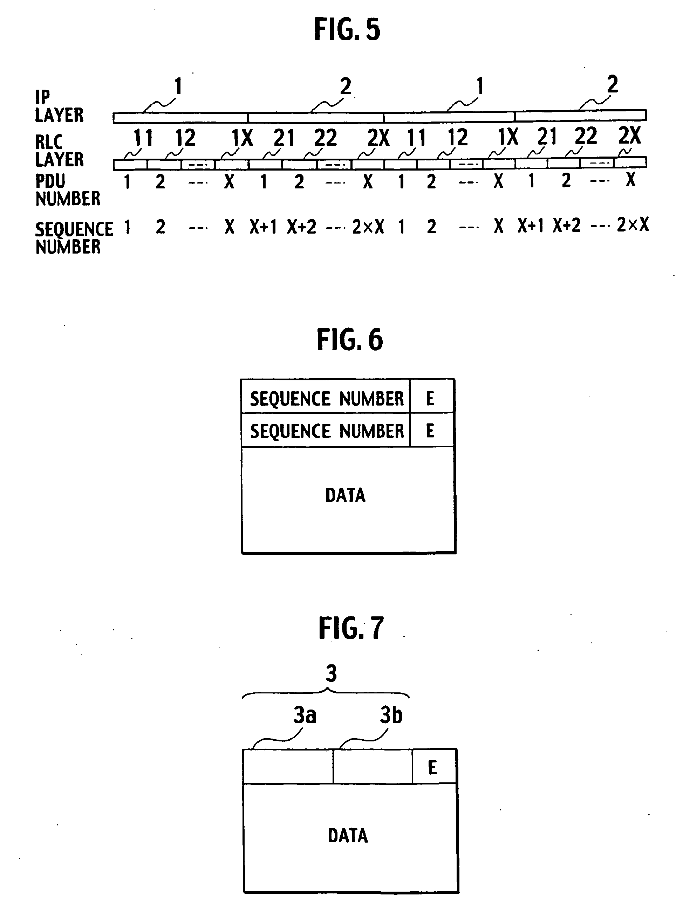

As shown in Fig 5, the lower layer data unit generation unit 50c changes the length of the sequence number in accordance with the length of the data series of the upper layer and assigns the sequence numbers to the lower layer data units. In Fig.4, the maximum value of the sequence numbers is X+1. In this case, it is not possible to uniquely identify the information of the part corresponding to the sequence number in the data series of the upper layer by using wnh the sequence numbers of the lower layer data units. For example, the sequence number 1 is assigned to both of the RLC-PDU 11 included in the IP packet 1 and the RLC-PDU 22 included in the IP packet 2. The RLC-PDU 11 and the RLC-PDU 22, which have the same sequence number, differs in information of the part corresponding to its sequence number in the data series of the upper layer.

Therefore, the lower layer data unit generation unit 50c changes the length of the sequence number in accordance with the length of the data series of the upper layer and assigns a different sequence number to each of the RLC-PDUs included in the same data series. Specifically, the lower layer data unit generation unit 50c changes the length of the sequence number so that the maximum value of the sequence numbers is equal to or greater than the number of RLC-PDUs constituting the data series.

In the case shown in Fig.5, since the number of RLC-PDUs constituting the data series of the upper layer is 2×X, the lower layer data unit generation unit 50c changes the length of the sequence number so that the maximum value of the sequence numbers is equal to or greater than 2×X. If the length of the sequence number is assumed to be n bits, the maximum value of the sequence numbers is represented by 2". Therefore, the lower layer data unit generation unit 50c tries to find the length n of the sequence number that satisfies 2ⁿ ≥ 2×X. In this manner, the lower layer data unit generation unit 50c extends the length of the sequence number.

Then, the lower layer data unit generation unit 50c generates sequence numbers based on the length of the extended sequence number and assigns them to the RLC-PDUs. Specifically, as shown in Fig.5, the lower layer data unit generation unit 50c assigns the sequence numbers 1 to X and X+1 to 2×X to the RLC-PDUs 11 to 1X and 21 to 2X constituting the data series of the upper layer, which is constituted of the two IP packets 1 and 2.

When the sequence numbers are extended in this manner, the lower layer data unit generation unit 50c can generate RLC-PDUs to which extended sequence numbers are set as shown in Fig.6. The lower layer data unit generation unit 50c sets an extension bit E next to the region indicating regular sequence numbers. If the extension bit E has been set, the region up to the next predetermined bit is extended for the region of the sequence numbers. Then, by not setting the next extension bit E, the lower layer data unit generation unit 50c ends the extension of the region of the sequence numbers, and set data afterward.

According to this, it is possible to uniquely identify the information of the part corresponding to the sequence number in the data series of the upper layer with the sequence numbers of the lower layer data units. For example, in Fig.5, the sequence number 1 is assigned only to the RLC-PDU 11 included in the IP packets 1 and 2 constituting the data series. Therefore, the sequence number 1 makes it possible to uniquely identify the information of the part corresponding to the sequence number 1 in the data series of the upper layer. As a result, the mobile station 10 can easily combine the lower layer data units and can further reduce the processing load.

### (Third method)

The lower layer data unit generation unit 50c changes the length of the lower layer data unit in accordance with the length of the data series of the upper layer and generates the lower layer data units to which the sequence numbers for identifying the data series of the upper layer are assigned. As shown in Fig.3, if the number of RLC-PDUs constituting the data series of the upper layer is greater than the maximum value of the sequence numbers, different sequence numbers are assigned to the RLC-PDUs even if the data series of the upper layer is the same.

Therefore, the lower layer data unit generation unit 50c divides the data series of the upper layer into lower layer data units, the number of which is equal to or less than the maximum value of the sequence numbers. The lower layer data unit generation unit 50c changes the length of the lower layer data unit based on the length of the data series of the upper layer and the length of the sequence number. Specifically, the lower layer data unit generation unit 50c determines the length of the lower layer data unit by dividing the length of the data series of the upper layer by the maximum value of the sequence numbers determined based on the length of the sequence number.

For example, if the length of the data series of the upper layer is 1,600 bytes, the length of the sequence number is five bits, and the maximum value of the sequence numbers is 32, it follows that 1,600 bytes / 32 = 50 bytes. Therefore, the lower layer data unit generation unit 50c determines that the length of the RLC-PDU is 50 bytes or longer. Then, the lower layer data unit generation unit 50c divides the data series of the upper layer by the determined length of the lower layer data unit (RLC-PDU), assigns the sequence numbers hereto, and thus generates the lower layer data units (RLC-PDUs).

According to this method, the server 50 can easily generate the lower layer data units (RLC-PDUs) to which the sequence numbers for identifying the data series of the upper layer are assigned by adjusting the length of the lower layer data unit. Therefore, the processing load of the server 50 can be reduced further.

### (Fourth method)

The lower layer data unit generation unit 50c assigns the sequence numbers including a data series identification region for identifying the data series of the upper layer and an order region indicating the order of the lower layer data units. Specifically, the lower layer data unit generation unit 50c generates a lower layer data unit (RLC-PDU) to which a sequence number 3 including two regions, that is, a data series identification region 3a and an order region 3b, are set, as shown in Fig.7. For example, as to the sequence number 3, its higher order bits can be used for the data series identification region 3a and its lower order bits can be used for the order region 3b.

To the data series identification region 3a, for example, an identifier for identifying the data series of the upper layer can be set. As an identifier for identifying the data senes of the upper layer, the identifier assigned to each data series, or the identifier for indicating the data series of retransmission by the repetitive transmission or the PtP repair can be used. By the identifier assigned to each data series, the data series of the upper layer can be immediately identified based on the identifier. By the identifier indicating the data series of retransmission, judging that the data series is the same as the data series transmined before enables the data series of the upper layer to be identified.

To the order region 3b, a value indicating the order of the lower layer data unit can be set. The value indicating the order at the first transmission can be made identical to that at the retransmission by the repetitive transmission or the PtP repair. Further, if a value indicating the start of the data series of the upper layer is added to the beginning of the value indicating the order, there is no necessity that the value subsequent hereto at the first transmission is made identical to that at the retransmission.

According to this, the mobile station 10 can easily judge the lower layer data units belonging to the data series of the same upper layer based on the data series identification region 3a. Therefore, the processing load of the receiver can be further reduced. Further, if the identifier indicating the data series of transmission is set to the data series identification region 3a, the mobile station 10 can easily identify that the received lower layer data units (RLC-PDUs) are a data series of retransmission based on the idennfier indicating retransmission. Therefore, the processing load of the mobile station 10 can be further reduced.

### (Communication method)

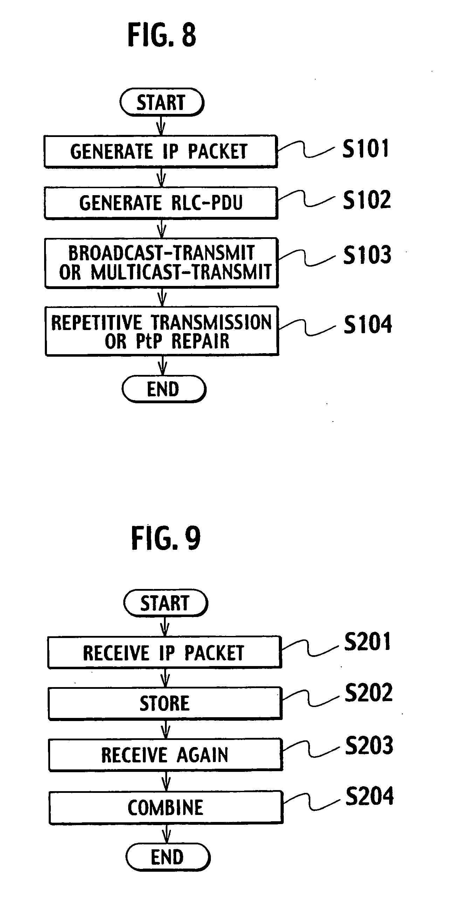

Next, a communication method using the communication system 100 shown in Fig.1 is explained below. The operation procedure of the server 50 is shown in Fig.8. The server 50 generates the IP packet from the data series (contents) (S101). The server 50 generates the RLC-PDUs, to which the sequence numbers for identifying the data series of the upper layer are assigned, using any one of the first to third methods described above (S102). The server 50 broadcast-transmits or multicast-transmits the IP packet including the generated plural RLC-PDUs to the mobile station 10 (S103). For the IP packet transmitted in the step (S103), the server 50 carries our the repetitive transmission or the PtP repair (S 104).

The operation procedure of the mobile station 10 is shown in Fig.9. The mobile station 10 receives the IP packet including the RLC-PDUs to which the sequence numbers for identifying the data series of the upper layer broadcast-transmitted or multicast-transmitted from the server 50 are assigned (S201). The mobile 10 stores the received IP packet in the buffer 10b. The mobile station 10 also stores the IP packet of all of the RLC-PDUs of which were impossible to receive in the buffer 10b without discarding (S202).

Next, the mobile station 10 receives again only the unsuccessfully received RLC-PDUs from among the IP packets transmitted in the repetitive transmission or the PtP repair by the server 50 (S203). The mobile station 10 combines the RLC-PDUs received successfully in the step (S201) and the RLC-PDUs received again in the step (S203) based on the sequence numbers, thereby to restore the data series of the upper layer (S204).

According to the communication system 100, the server 50, the mobile station 10, and the communication method described above, the server 50 can generate the lower layer data units (RLC-PDUs) to which the sequence numbers for identifying the data series (contents) of the upper layer are assigned and transmit the lower layer data units (RLC-PDUs). Therefore, by using the sequence numbers, the mobile station 10 can combine the lower layer data units (RLC-PDUs) correctly received last time and the newly received lower layer data units (RLC-PDUs) and restore the data series of the upper layer. Therefore, deterioration in the reception quality and an increase in the processing load of the mobile station 10 and the server 50 can be prevented.

Although the inventions have been described above by reference to certain embodiments of the inventions, the inventions are not limited to the embodiments described above. Modifications and variations of the embodiments described above will occur to those skilled in the art, in light of the above teachings. For example, as to the lower layer data unit generation unit 50c, its generation method is not limited to the above-mentioned first to fourth methods as long as the lower layer data units to which the sequence numbers for identifying the data series of the upper are assigned can be generated.

## Claims

1. A multimedia broadcast multicast service transmitter (50), comprising:
an upper layer data unit generation unit (50d) adapted to generate at least one upper layer data unit constituting a data series of an upper layer;
***characterized by***
a lower layer data unit generation unit (50c) adapted to generate at least one lower layer data unit constituting the upper layer data unit and adapted to assign a sequence number for uniquely identifying the lower layer data unit in the data series of the upper layer to the generated lower layer data unit; and
a communication unit (50a) adapted to carry out repetitive broadcast transmission or multicast transmission of the data series of the upper layer;
wherein the lower layer data unit generation unit (50c) is adapted to assign a same series of sequence number to the lower layer data unit constituting the data series of the upper layer for each repetitive transmission.

2. The multimedia broadcast multicast service transmitter according to claim 1, wherein the sequence number is assigned in sequence in accordance with a location of the lower layer data unit in the data series of the upper layer.

3. The multimedia broadcast multicast service transmitter according to claim 1, wherein the lower data generation unit (50c) is adapted to change a length of the sequence number series in accordance with a length of the data series of the upper layer, so that the maximum value of the sequence number is equal to or greater than the number of lower layer data unit constituting the upper layer data unit which constitute the data series of the upper layer.

4. The multimedia broadcast multicast service transmitter according to claim 1, wherein the lower data generation (50c) is adapted to change a length of the lower layer data unit in accordance with a length of the data series of the upper layer.

5. A multimedia broadcast multicast service communication system, ***characterized by:***
a transmitter according to one of the claims 1 to 4; and
a receiver (10) adapted to receive lower layer data units constituting the data series of the upper layer and adapted to combine the lower layer data units received during the repetitive broadcast transmission or multicast transmission based on the same series of sequence number assigned to each of the lower layer data units.

6. A multimedia broadcast multicast service communication method, comprising the steps:
generating at least one upper layer data unit constituting a data series of an upper layer;
generating at least one lower layer data unit constituting the upper layer data unit and assigning a sequence number to the generated lower layer data unit for uniquely identifying the lower layer data unit in the data series of the upper layer; and
carrying out repetitive broadcast transmission or multicast transmission of the data series of the upper layer;
wherein a same series of the sequence number is assigned to the lower layer data unit constituting the data series of the upper layer, for each repetitive transmission.

## Patentansprüche

1. Multimedia-Rundruf-Gruppenruf-Dienst-Sender (50) mit:
einer Oberschichtdateneinheit-Erzeugungseinheit (50d), die angepasst ist, um mindestens eine Oberschichtdateneinheit, die eine Datenreihe einer oberen Schicht bildet, zu erzeugen;
***gekennzeichnet durch***
eine Unterschichtdateneinheit-Erzeugungseinheit (50c), die angepasst ist, um mindestens eine Unterschichtdateneinheit, die die Oberschichtdateneinheit bildet, zu erzeugen, und angepasst ist, um der erzeugten Unterschichtdateneinheit eine Laufnummer zum eindeutigen Identifizieren der Unterschichtdateneinheit in der Datenreihe der oberen Schicht zuzuweisen; und
eine Kommunikationseinheit (50a), die angepasst ist, um eine wiederholte Rundrufsendung oder Gruppenrufsendung der Datenreihe der oberen Schicht auszuführen;
wobei die Unterschichtdateneinheit-Erzeugungseinheit (50c) angepasst ist, um der Unterschichtdateneinheit, die die Datenreihe der oberen Schicht bildet, für jede wiederholte Sendung eine gleiche Reihe einer Laufnummer zuzuweisen.

2. Multimedia-Rundruf-Gruppenruf-Dienst-Sender nach Anspruch 1, bei dem die Laufnummer gemäß einem Ort der Unterschichtdateneinheit in der Datenreihe der oberen Schicht der Reihe nach zugewiesen wird.

3. Multimedia-Rundruf-Gruppenruf-Dienst-Sender nach Anspruch 1, bei dem die Unterschichtdateneinheit-Erzeugungseinheit (50c) angepasst ist, um eine Länge der Laufnummernreihe gemäß einer Länge der Datenreihe der oberen Schicht zu ändern, so dass der maximale Wert der Laufnummer gleich oder größer als die Zahl von Unterschichtdateneinheiten ist, die die Oberschichtdateneinheit, die die Datenreihe der oberen Schicht bildet, bilden.

4. Multimedia-Rundruf-Gruppenruf-Dienst-Sender nach Anspruch 1, bei dem die Unterschichtdateneinheit-Erzeugungseinheit (50c) angepasst ist, um eine Länge der Unterschichtdateneinheit gemäß einer Länge der Datenreihe der oberen Schicht zu ändern.

5. Multimedia-Rundruf-Gruppenruf-Dienst-Kommunikationssystem, ***gekennzeichnet durch***
einen Sender nach einem der Ansprüche 1 bis 4; und
einen Empfänger (10), der angepasst ist, um Unterschichtdateneinheiten, die die Datenreihe der oberen Schicht bilden, zu empfangen, und angepasst ist, um die Unterschichtdateneinheiten, die während der wiederholten Rundrufsendung oder Gruppenrufsendung empfangen werden, basierend auf der gleichen Reihe einer Laufnummer, die jeder der Unterschichtdateneinheiten zugewiesen ist, zu kombinieren.

6. Multimedia-Rundruf-Gruppenruf-Dienst-Kommunikationsverfahren mit folgenden Schritten:
Erzeugen mindestens einer Oberschichtdateneinheit, die eine Datenreihe einer oberen Schicht bildet;
Erzeugen mindestens einer Unterschichtdateneinheit, die die Oberschichtdateneinheit bildet, und Zuweisen einer Laufnummer zu der erzeugten Unterschichtdateneinheit zum eindeutigen Identifizieren der Unterschichtdateneinheit in der Datenreihe der oberen Schicht; und
Ausführen einer wiederholten Rundrufsendung oder Gruppenrufsendung der Datenreihe der oberen Schicht;
wobei der Unterschichtdateneinheit, die die Datenreihe der oberen Schicht bildet, für jede wiederholte Sendung eine gleiche Reihe der Laufnummer zugewiesen wird.

## Revendications

1. Emetteur de service de diffusion et multidiffusion multimédia (50), comprenant :
une unité de génération d'unité de données de couche supérieure (50d) adaptée pour générer au moins une unité de données de couche supérieure constituant une série de données d'une couche supérieure ;
***caractérisé par***
une unité de génération d'unité de données de couche inférieure (50c) adaptée pour générer au moins une unité de données de couche inférieure constituant l'unité de données de couche supérieure et adaptée pour allouer un numéro d'ordre pour identifier uniquement l'unité de données de couche inférieure dans la série de données de la couche supérieure à l'unité de données de couche inférieure générée ; et
une unité de communication (50a) adaptée pour effectuer une transmission de multidiffusion ou une transmission de diffusion répétitive de la série de données de la couche supérieure ;
dans lequel l'unité de génération d'unité de données de couche inférieure (50c) est adaptée pour allouer une même série de numéros d'ordre à l'unité de données de couche inférieure constituant la série de données de la couche supérieure pour chaque transmission répétitive.

2. Emetteur de service de diffusion et multidiffusion multimédia selon la revendication 1, dans lequel le numéro d'ordre est alloué en séquence en fonction d'une position de l'unité de données de couche inférieure dans la série de données de la couche supérieure.

3. Emetteur de service de diffusion et multidiffusion multimédia selon la revendication 1, dans lequel l'unité de génération de données inférieures (50c) est adaptée pour changer une longueur de la série de numéros d'ordre en fonction d'une longueur de la série de données de la couche supérieure, de sorte que la valeur maximum du numéro d'ordre soit égale ou supérieure au numéro d'unité de données de couche inférieure constituant l'unité de données de couche supérieure qui constitue la série de données de la couche supérieure.

4. Emetteur de service de diffusion et multidiffusion multimédia selon la revendication 1, dans lequel la génération de données inférieures (50c) est adaptée pour changer une longueur de l'unité de données de couche inférieure en fonction d'une longueur de la série de données de la couche supérieure.

5. Système de communication de service de diffusion et multidiffusion multimédia, ***caractérisé par*** :
un émetteur selon l'une des revendications 1 à 4 ; et
un récepteur (10) adapté pour recevoir les unités de données de couche inférieure constituant la série de données de la couche supérieure et adapté pour combiner les unités de données de couche inférieure reçues pendant la transmission de multidiffusion ou la transmission de diffusion répétitive sur la base de la même série de numéros d'ordre allouée à chacune des unités de données de couche inférieure.

6. Procédé de communication de service de diffusion et multidiffusion multimédia, comprenant les étapes consistant à :
générer au moins une unité de données de couche supérieure constituant une série de données d'une couche supérieure ;
générer au moins une unité de données de couche inférieure constituant l'unité de données de couche supérieure et allouer un numéro d'ordre à l'unité de données de couche inférieure générée pour identifier uniquement l'unité de données de couche inférieure dans la série de données de la couche supérieure ; et
effectuer une transmission de multidiffusion ou une transmission de diffusion répétitive de la série de données de la couche supérieure ;
dans lequel une même série de numéros d'ordre est allouée à l'unité de données de couche inférieure constituant la série de données de la couche supérieure, pour chaque transmission répétitive.
